# EUROPÄISCHE PATENTSCHRIFT

(11) **EP 3 021 005 B1**
(45) Veröffentlichungstag und Bekanntmachung des Hinweises auf die Patenterteilung: **07.03.2018**
(21) Anmeldenummer: 14003851.4
(22) Anmeldetag: 14.11.2014
(51) Int. Cl.: F16H 25/24

(54) **Gewindetrieb mit Steilgewinde**
Screw drive with steep thread
Vis de réglage à filetage à pas rapide

(43) Veröffentlichungstag der Anmeldung: 18.05.2016
(73) Patentinhaber: Lakeview Innovation Ltd., 6374 Buochs (CH)
(72) Erfinder: Darko, Lukic, 79108 Freiburg (DE); Olaf, Klein, 79312 Emmendingen (DE)
(74) Vertreter: Grünecker Patent- und Rechtsanwälte PartG mbB

(56) Entgegenhaltungen:
- DE-A1- 2 030 260
- DE-A1- 3 146 804
- DE-A1- 10 028 968
- DE-A1- 19 831 940
- JP-A- S61 127 966
- JP-A- 2000 346 164
- JP-U- S6 415 855
- US-A- 4 582 368
- US-A1- 2004 001 656

## Beschreibung

Die vorliegende Erfindung betrifft einen Gewindetrieb nach dem Oberbegriff des unabhängigen Anspruchs 1, und eine Spindelmutter für einen solchen Gewindetrieb, beansprucht im Anspruch 13. Bei herkömmlichen Gewindetrieben kann die Gewindespindel beispielsweise aus Keramik bestehen, wobei die Spindelmutter aus Stahl besteht. Auch sind Gewindetriebe bekannt, die über eine Gewindespindel aus Stahl und eine Spindelmutter aus Bronze verfügen. In beiden Fällen wird in der Regel ein geeigneter Schmierstoff eingesetzt, um die tribologischen Eigenschaften des Gewindetriebs zu verbessern. Bei hohen Relativgeschwindigkeiten zwischen Gewindespindel und Spindelmutter kann es zu einer Zersetzung des Schmierstoffs durch Verkokung kommen. Um zu verhindern, dass dadurch Reibung und Verschleiß zunehmen, muss der Schmierstoff in regelmäßigen Abständen ersetzt werden. Je nach Einsatzgebiet des Gewindetriebs ist dies jedoch nur mit erheblichem Aufwand oder sogar überhaupt nicht möglich.
Aus DE 100208968 A1 ist ein Gewindetrieb bekannt, bei dem der Gewindeteil der Spindelmutter mit einem Gleitbelag versehen ist. Der Gleitbelag kann ein Gewebe aus einem Polytetrafluorethylen sein. Alternativ kann es sich bei dem Gleitbelag auch um einen Belag aus einer Sinterbronze handeln, die mit einem Polytetrafluorethylen gefüllt ist.
Ein weiterer Gewindetrieb ist aus DE 3146804 A1 bekannt. Bei diesem Gewindetrieb besteht die Spindelmutter aus einem Sinterwerkstoff, wohingegen die Gewindespindel aus einem Stahl-Flachband gefertigt ist. Um eine möglichst geringe 'Selbstreibung' zu erreichen und den Direktantrieb durch einen Elektromotor ohne zwischengeschaltetes Getriebe zu ermöglichen, soll das Gewinde von Gewindespindel und Spindelmutter einen minimalen Steigungswinkel aufweisen. Insbesondere bei hohen Verstellgeschwindigkeiten des Gewindetriebs kann es aufgrund der großen Umdrehungsgeschwindigkeiten des rotativen Antriebs und aufgrund der daraus resultierenden hohen Relativgeschwindigkeiten zwischen Gewindespindel und Spindelmutter zu der eingangs angesprochenen Verkokung bzw. Zersetzung des Schmierstoffs kommen. Zudem ist die Herstellung der Spindelmutter relativ aufwendig und daher teuer.

Die Druckschrift DE 20 30 260 A1 beschreibt eine gattungsgemässe hydrostatisch gelagerte Gewindespindel, bei der der Gewindeeinsatz aus einem porösen Werkstoff mit offenen Poren besteht, durch die ein unter Druck stehendes gasförmiges Medium hindurch auf die Gewindespindel wirkt, um die Gewindespindel verschleißarm und mit geringer Selbsthemmung in dem porösen Gewindeeinsatz zu bewegen. Die Druckschriften JP 2000 346164 A, JP S61 127966 A und JP S64 15855 U zeigen weitere hydrostatisch gelagerte Gewindespindeln.

Aus DE 19831940 A1 ist ein weiterer Gewindetrieb bekannt. Das Innengewinde der Spindelmutter ist mit einer gleitfähigen Kunststoffschicht beschichtet. Als geeignete Materialien für die Kunststoffschicht sind Polytetrafluorethylen, eine Kunststofflegierung auf Basis von Polytetrafluorethylen, Polyoxymethylen und Polyamid beschrieben. Die Kunststoffbeschichtung kann entweder im Spritzgussverfahren aufgebracht oder als eigensteifer Einsatz mit dem Gewinde der Spindelmutter verschraubt und geeignet befestigt werden. Das Innengewinde der Spindelmutter kann ferner als Steilgewinde ausgeführt sein. Die Herstellung der Spindelmutter ist relativ aufwändig. Aufgrund des verwendeten Kunststoffbelags ist eine hohe Belastung des Gewindetriebs nur bedingt möglich.

Aufgabe der vorliegenden Erfindung ist es, den gattungsgemäßen Gewindetrieb derart weiterzubilden, dass der Gewindetrieb hochgradig belastbar und dabei besonders wartungsarm ist. Ferner soll der Gewindetrieb einfach sowie kostengünstig herstellbar sein.

Die Aufgabe wird gelöst durch die Merkmale des unabhängigen Anspruchs 1. Demnach liegt bei einem gattungsgemäßen Gewindetrieb dann eine erfindungsgemäße Lösung der Aufgabe vor, wenn das Gleitfluid ein synthetisches Kohlenwasserstofföl, eine mesogene (flüssigkristallbasierte) Flüssigkeit oder ein eine mesogene (flüssigkristallbasierte) Flüssigkeit enthaltendes Fluidgemisch ist. Die offenporige Struktur des Spindelmutter-Werkstoffs ist in der Lage, ein zur Schmierung des Gewindetriebs verwendetes Gleitfluid aufzunehmen und während des Betriebs kontinuierlich abzugeben, so dass stets ein ausreichender Schmierfilm zwischen Gewindespindel und Spindelmutter gewährleistet ist. Der Gewindetrieb wird dadurch besonders wartungsarm und verfügt über eine deutlich erhöhte Lebensdauer. Aufgrund des Steilgewindes ist die Relativgeschwindigkeit zwischen Gewindespindel und Spindelmutter selbst bei raschen Vortriebsgeschwindigkeiten des Gewindetriebs relativ gering, so dass eine geringere Gefahr der Zersetzung bzw. Verkokung des eingesetzten Schmierstoffs besteht.

Es wird darauf hingewiesen, dass unter einem Gewindeteil im Sinne der vorliegenden Anmeldung kein Gleitbelag eines Innengewindes, wie er aus dem oben genannten Stand der Technik bekannt ist, sondern ein massiver Körper mit Durchgangsöffnung und Innengewinde verstanden werden soll. Ferner wird darauf hingewiesen, dass unter einem Steilgewinde im Sinne der vorliegenden Anmeldung ein Gewinde verstanden wird, das einen größeren Steigungswinkel aufweist als ein Regelgewinde.

Vorteilhafte Ausgestaltungen der vorliegenden Erfindung sind Gegenstand der Unteransprüche.

In einer bevorzugten Ausführungsform der vorliegenden Erfindung weist das Steilgewinde einen Steigungswinkel von mindestens 6 Grad auf. Dadurch reduziert sich die Relativgeschwindigkeit zwischen Gewindespindel und Spindelmutter selbst bei hohen Vorschubgeschwindigkeiten des Gewindetriebs auf Werte, die eine Zersetzung bzw. Verkokung des verwendeten Schmierstoffs verhindern. Dadurch erhöht sich zum einen das Wartungsintervall des erfindungsgemäßen Gewindetriebs und zum anderen auch dessen Lebensdauer. Auch die Herstellung vereinfacht sich insbesondere in einer Ausführungsform, bei welcher die gesamte Spindelmutter in einem Stück gefertigt ist.

In der vorliegenden Erfindung ist der Werkstoff des Gewindeteils mit einem Gleitfluid getränkt. Dadurch wird eine ausreichende Schmierung zwischen Gewindespindel und Spindelmutter ohne zusätzliche Schmierstoffe gewährleistet. Der Gewindetrieb ist sofort einsatzbereit. Die Tränkung des Gewindeteils mit dem Gleitfluid erfolgt vorzugsweise im Vakuum.

In einer weiteren Ausführungsform der vorliegenden Erfindung handelt es sich bei dem Werkstoff um einen Sinterwerkstoff. Sinterwerkstoffe können besonders einfach mit offenporiger Struktur hergestellt werden. Die Ausführung des Innengewindes als Steilgewinde hat dabei den Vorteil, dass sich ein Gewindeteil mit Steilgewinde deutlich einfacher im Sinterverfahren herstellen lässt als ein Gewindeteil mit Fein- oder Regelgewinde.

In einer weiteren bevorzugten Ausführungsform der vorliegenden Erfindung handelt es sich bei dem Sinterwerkstoff des Gewindeteils um ein Sintermetall, insbesondere um einen im Sinterverfahren hergestellten Metallschaum. Alternativ dazu kann auch ein schmelzmetallurgisch hergestellter Metallschaum verwendet werden. Bei Verwendung einer Gewindespindel aus Keramik wird dadurch eine besonders vorteilhafte Reibpaarung erzielt. Sintermetall lässt sich zudem besonders einfach mit einem Gleitfluid tränken und gewährleistet insgesamt eine hohe Lebensdauer des erfindungsgemäßen Gewindetriebs. Um zu verhindern dass sich die Poren des Sintermetalls mit der Zeit zusetzen, sodass der einwandfreie Aufbau eines Schmierfilms zwischen Gewindespindel und Spindelmutter mit fortschreitendem Alter des Gewindetriebs beeinträchtigt sein könnte, kommt besonders bevorzugt ein korrosionsbeständiger Sinterstahl oder eine Sinterbronze als Sintermetall zum Einsatz.

Als vorteilhaft hat es sich erwiesen, wenn der Werkstoff eine Dichte von 6,4 g/cm³ bis 6,8 g/cm³ aufweist. Dies gilt insbesondere für den angesprochenen Sinterstahl.

Um eine einwandfreie Schmierung bei gleichzeitig größtmöglicher Stabilität und Belastbarkeit zu gewährleisten, weist der Werkstoff in einer weiteren besonders bevorzugten Ausführungsform der vorliegenden Erfindung ein Porenvolumen von 15 +/- 2,5 % auf.

In einer weiteren bevorzugten Ausführungsform der vorliegenden Erfindung ist der Sinterwerkstoff unter Verwendung eines grobkörnigen Granulats hergestellt. Dadurch wird eine besonders einfache und kostengünstige Herstellung mit homogen verteilten Poren möglich.

Weiter bevorzugt wird die offenporige Struktur mittels Powder Injection Moulding aus Metall oder auch aus Keramik erzeugt. Anstatt der Verwendung eines grobkörnigen Granulats kann auch ein Platzhalterwerkstoff verwendet werden. Alternativ kann die offenporige Struktur auch aus einem Metallschaum, einem Keramikschaum oder einer Hohlkugelstruktur generiert werden. Auch ist es möglich, die Herstellung mittels selektivem Lasersintern, selektivem Laserschmelzen oder Elektronenstrahlschmelzen durchzuführen.

In einer weiteren bevorzugten Ausführungsform der vorliegenden Erfindung ist der Gewindeteil zumindest im Bereich der Gewindeeingriffsflächen gehärtet und/oder oberflächenbehandelt und/oder beschichtet. Dadurch wird die Lebensdauer des erfindungsgemäßen Gewindetriebs weiter erhöht.

In einer besonders bevorzugten Ausführungsform der vorliegenden Erfindung weist die Spindelmutter zwei jeweils als Gewindebuchse ausgeführte Gewindeteile auf, die koaxial zueinander angeordnet sind. Dadurch ist es möglich, relativ lange Spindelmuttern unter Verwendung von standardisierten und relativ einfach zu fertigenden kurzen Gewindebuchsen herzustellen. Je kürzer die Gewindebuchsen sind, desto leichter können der Sinterprozess und insbesondere die Ausformung der Gewindebuche durchgeführt werden. Vorzugsweise sind die beiden Gewindebuchsen axial voneinander beabstandet gehalten, sodass zwischen den Gewindebuchsen bei Bedarf eine zusätzliche Menge an Gleitfluid aufgenommen werden kann. Vorzugsweise werden die beiden Gewindebuchsen in einem gemeinsamen Gehäuse der Spindelmutter gehalten bzw. sind fest mit dem gemeinsamen Gehäuse verbunden. Bei dem Gehäuse kann es sich beispielsweise um eine hohlzylindrische Hülse handeln. Die beiden Gewindebuchsen können mit der hohlzylindrischen Hülse u. a. verlötet oder auch anderweitig an der Hülse befestigt werden. Um die Herstellung der Spindelmutter zu vereinfachen, kann das gemeinsame Gehäuse mit einer Stufenbohrung versehen sein, sodass für beide Gewindebuchsen ein entsprechender Axialanschlag ausgebildet ist. Um eine ausreichende Menge an Gleitfluid aufnehmen zu können, beträgt die Wandstärke der Gewindebuchsen weiter vorzugsweise zumindest das Zweifache der Gewindetiefe des Innengewindes. Besonders bevorzugt beträgt die Wandstärke zumindest das Dreifache der Gewindetiefe. Diese vorteilhaften Ausführungsformen bieten sich im Übrigen ganz allgemein für den Gewindeteil oder die Gewindeteile an, ungeachtet dessen, ob der Gewindeteil als Gewindebuchse ausgeführt ist. Anstatt eines mehrteiligen Aufbaus kann die Spindelmutter selbstverständlich auch in einem Stück, beispielsweise im Sinterverfahren, hergestellt werden.

In einer weiteren bevorzugten Ausführungsform der vorliegenden Erfindung ist die Gewindespindel des Gewindetriebs aus einer Keramik gefertigt. Bei Verwendung einer Spindelmutter aus einem Sinterstahl ergibt sich dadurch eine besonders vorteilhafte und beständige Reibpaarung. Die Lebensdauer des erfindungsgemäßen Gewindetriebs wird durch die Verwendung einer Gewindespindel aus Keramik weiter erhöht. Vorzugsweise eignet sich Zirkonoxid als Keramikwerkstoff. Ganz besonders bevorzugt weist die Gewindespindel zumindest im Bereich der Gewindeeingriffsflächen eine glatte, polierte Oberfläche auf. Auch dies trägt zu einer erhöhten Lebensdauer und zu einer einwandfreien Funktion des erfindungsgemäßen Gewindetriebs bei.

In einer weiteren bevorzugten Ausführungsform der vorliegenden Erfindung weist die Gewindespindel einen Durchmesser im Bereich zwischen 1 mm und 12 mm auf.

In einer weiteren bevorzugten Ausführungsform umfasst der erfindungsgemäße Gewindetrieb einen Elektromotor mit mehrstufigem Planetengetriebe als Antrieb. Alternativ kann entweder die Gewindespindel oder die Spindelmutter angetrieben sein. Anstatt eines mehrstufigen Planetengetriebes kann selbstverständlich auch jedes andere untersetzende Getriebe eingesetzt werden. Vorzugsweise kommen mehrstufig untersetzende Getriebe zum Einsatz, sodass relativ kleindimensionierte Elektromotoren verwendet werden können.

Die Erfindung stellt ferner eine Spindelmutter für den erfindungsgemäßen Gewindetrieb bereit.

Die Erfindung wird im Folgenden anhand von Zeichnungen näher erläutert:
Es zeigen:
   - Figur 1:: einen Längsschnitt einer erfindungsgemäßen Spindelmutter,
   - Figur 2:: eine Detailansicht einer der beiden Gewindebuchsen der in Figur 1 gezeigten Spindelmutter,
   - Figur 3:: eine ausschnittsweise Vergrößerung des Sinterwerkstoffs der in Figur 2 gezeigten Gewindebuchse, und
   - Figur 4:: einen erfindungsgemäßen Gewindetrieb mit der in Figur 1 gezeigten Spindelmutter.

Für die folgenden Ausführungen gilt, dass gleiche Teile durch gleiche Bezugszeichen bezeichnet sind. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

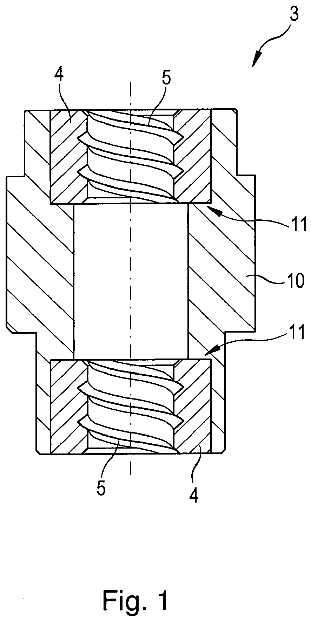

Figur 1 zeigt eine erfindungsgemäße Spindelmutter 3 im Längsschnitt. Die Spindelmutter 3 ist mehrteilig aufgebaut und umfasst ein Gehäuse 10 sowie zwei in das Gehäuse eingesetzte Gewindebuchsen 4. Die beiden Gewindebuchsen 4 bestehen aus einem Sinterstahl und sind koaxial zueinander in dem Gehäuse 10 angeordnet. Die beiden Gewindebuchsen sind ferner axial voneinander beabstandet. Um die beiden Gewindebuchsen exakt im Gehäuse 10 zu positionieren, ist das Gehäuse als hohlzylindrische Hülse mit zentraler Stufenbohrung ausgeführt. Die Stufenbohrung umfasst zwei als Axialanschlag ausgebildete Stufen 11, bis zu welchen die beiden Gewindebuchsen 4 jeweils vom unteren bzw. oberen Ende des Gehäuses 10 in die zentrale Bohrung eingesetzt sind. Ebenso wie die beiden Gewindebuchsen 4 kann das Gehäuse 10 aus einem korrosionsbeständigen Stahl bestehen. Im Gegensatz zu den beiden Gewindebuchsen ist es jedoch nicht erforderlich, dass das Gehäuse aus einem Sinterwerkstoff hergestellt ist. Gehäuse und Gewindebuchsen sind geeignet miteinander verbunden. Beispielsweise können die Gewindebuchsen 4 mit dem Gehäuse 10 verlötet sein.

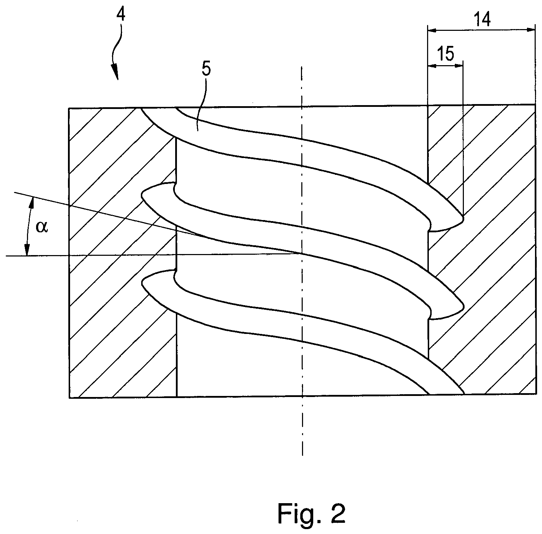

Figur 2 zeigt eine Detailansicht einer der beiden in Figur 1 gezeigten Gewindebuchsen 4. Deutlich zu erkennen ist, dass das Innengewinde 5 der Gewindebuchse 4 als Steilgewinde ausgeführt ist. Der Steigungswinkel α des Steilgewindes beträgt etwa 15°. Ebenfalls ist in der Darstellung zu erkennen, dass die Gewindebuchse 4 als massives Bauteil ausgeführt ist. Die Wandstärke 14 der Gewindebuchse beträgt mehr als das Dreifache der Gewindetiefe 15 des Steilgewindes.

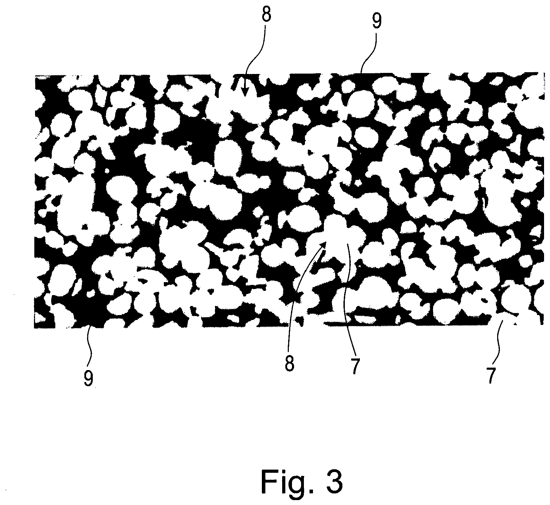

Figur 3 zeigt eine vergrößerte Darstellung des Werkstoffs, aus dem die Gewindebuchse 4 besteht. Bei dem Werkstoff handelt es sich um einen korrosionsbeständigen Sinterstahl mit einer offenporigen Struktur. Dies bedeutet, zwischen dem Stahlgerüst 9 sind Poren 8 ausgebildet, die in etwa 15 % des Gesamtvolumens ausmachen. Der Sinterstahl hat dadurch eine Dichte von etwa 6,6 g/cm³. Die Poren 8 des Sinterwerkstoffs entstehen durch die Verwendung eines grobkörnigen Granulats. Um eine kostengünstige und zuverlässige Schmierung zu gewährleisten, sind die beiden Gewindebuchsen 4 der Spindelmutter mit einem Gleitfluid, nämlich einem synthetischen Kohlenwasserstofföl, getränkt. Um die offenporige Struktur möglichst vollständig mit dem Gleitfluid zu füllen, findet der Tränkvorgang vorzugsweise im Vakuum statt. Das Gleitfluid ist somit in den Poren 8 des Sinterwerkstoffs aufgenommen und erzeugt durch Kapillarwirkung an den Eingriffsflächen des Gewindes einen entsprechenden Schmierfilm.

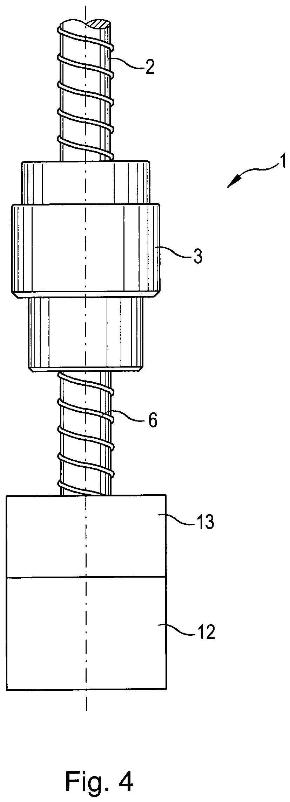

Figur 4 schließlich zeigt einen erfindungsgemäßen Gewindetrieb 1 mit der in Figur 1 gezeigten Spindelmutter 3. Der Gewindetrieb 1 umfasst neben der Spindelmutter 3 eine Gewindespindel 2, deren Außengewinde 6 mit dem Innengewinde 5 der Spindelmutter zusammenwirkt. Die Gewindespindel 2 besteht aus Keramik, vorzugsweise aus Zirkonoxid. Um den Verschleiß zu reduzieren, ist die Gewindespindel zumindest im Bereich der Gewindeeingriffsflächen glatt poliert. Die Gewindespindel wird angetrieben durch einen Elektromotor 12 mit einem mehrstufig untersetzenden Planetengetriebe 13. Bei dem erfindungsgemäßen Gewindetrieb wird durch eine relativ moderate Rotationsgeschwindigkeit der Gewindespindel 2 ein relativ großer Vorschub der Spindelmutter 3 in axialer Richtung erzeugt. Die Spindelmutter 3 ist hierzu selbstverständlich durch nicht dargestellte Führungen axial verschieblich aber drehfest geführt. Anders als in der Darstellung ist es selbstverständlich auch möglich, anstatt der Gewindespindel 2 die Spindelmutter 3 mit dem Elektromotor anzutreiben.

## Patentansprüche

1. Gewindetrieb (1) mit einer Gewindespindel (2) und einer Spindelmutter (3), wobei die Spindelmutter (3) zumindest einen Gewindeteil (4) mit Innengewinde (5) aufweist, und wobei das Innengewinde (5) als Steilgewinde ausgeführt ist und mit einem Außengewinde (6) der Gewindespindel (2) in Eingriff steht, wobei der Gewindeteil (4) aus einem Werkstoff besteht, welcher eine offenporige Struktur aufweist, und wobei der Werkstoff mit einem Gleitfluid (7) getränkt ist, **dadurch gekennzeichnet, dass** das Gleitfluid (7) ein synthetisches Kohlenwasserstofföl, eine mesogene (flüssigkristallbasierte) Flüssigkeit oder ein eine mesogene (flüssigkristallbasierte) Flüssigkeit enthaltendes Fluidgemisch ist.

2. Gewindetrieb (1) nach Anspruch 1, **dadurch gekennzeichnet, dass** das Steilgewinde einen Steigungswinkel α von mindestens 10° aufweist.

3. Gewindetrieb (1) nach Anspruch 1 oder 2, **dadurch gekennzeichnet, dass** der Werkstoff ein Sinterwerkstoff ist.

4. Gewindetrieb (1) nach Anspruch 3, **dadurch gekennzeichnet, dass** der Sinterwerkstoff ein korrosionsbeständiger Sinterstahl oder eine Sinterbronze ist.

5. Gewindetrieb (1) nach einem der Ansprüche 1 bis 4, **dadurch gekennzeichnet, dass** der Werkstoff eine Dichte von 6,4 g/cm³ bis 6,8 g/cm³ aufweist.

6. Gewindetrieb (1) nach einem der Ansprüche 1 bis 4, **dadurch gekennzeichnet, dass** der Werkstoff ein Porenvolumen von 15 +/- 2,5 % aufweist.

7. Gewindetrieb (1) nach einem der Ansprüche 3 bis 6, **dadurch gekennzeichnet, dass** der Sinterwerkstoff unter Verwendung eines grobkörnigen Granulats hergestellt ist.

8. Gewindetrieb (1) nach einem der Ansprüche 1 bis 7, **dadurch gekennzeichnet, dass** der Gewindeteil (4) gehärtet und/oder oberflächenbehandelt und/oder beschichtet ist.

9. Gewindetrieb (1) nach einem der Ansprüche 1 bis 8, **dadurch gekennzeichnet, dass** die Spindelmutter (3) zwei jeweils als Gewindebuchse ausgeführte Gewindeteile (4) aufweist, die koaxial zueinander angeordnet sind.

10. Gewindetrieb (1) nach einem der Ansprüche 1 bis 9, **dadurch gekennzeichnet, dass** die Gewindespindel (2) aus einer Keramik gefertigt ist.

11. Gewindetrieb (1) nach einem der Ansprüche 1 bis 10, **dadurch gekennzeichnet, dass** die Gewindespindel (2) einen Durchmesser im Bereich zwischen 1 mm und 12 mm aufweist.

12. Gewindetrieb (1) einem der Ansprüche 1 bis 11, **dadurch gekennzeichnet, dass** der Gewindetrieb (1) einen Elektromotor (12) mit mehrstufigem Planetengetriebe (13) als Antrieb aufweist.

13. Spindelmutter (3) für einen Gewindetrieb (1) nach einem der Ansprüche 1 bis 9, wobei die Spindelmutter (3) zumindest einen Gewindeteil (4) mit Innengewinde (5) aufweist, und wobei das Innengewinde (5) als Steilgewinde ausgeführt ist und mit einem Außengewinde (6) einer Gewindespindel (2) des Gewindetriebs in Eingriff bringbar ist, wobei der Gewindeteil (4) aus einem Werkstoff besteht, welcher eine offenporige Struktur aufweist, und wobei der Werkstoff mit einem Gleitfluid (7) getränkt ist, **dadurch gekennzeichnet, dass** das Gleitfluid (7) ein synthetisches Kohlenwasserstofföl, eine mesogene (flüssigkristallbasierte) Flüssigkeit oder ein eine mesogene (flüssigkristallbasierte) Flüssigkeit enthaltendes Fluidgemisch ist.

## Claims

1. Screw assembly (1) with a threaded spindle (2) and a spindle nut (3), where said spindle nut (3) comprises at least one threaded portion (4) with an internal thread (5), and where said internal thread (5) is configured as a steep thread and engages in an external thread (6) of said threaded spindle (2), wherein said threaded portion (4) is made of material that has an open-pore structure, and wherein the material is soaked with a glide fluid (7), **characterized in that** said glide fluid (7) is synthetic hydrocarbon oil, a mesogenic (liquid-crystal-based) liquid or a fluid mixture containing a mesogenic (liquid-crystal-based) liquid.

2. Screw assembly (1) according to claim 1, **characterized in that** said steep thread has a pitch angle α of at least 10°.

3. Screw assembly (1) according to claim 1 or 2, **characterized in that** said material is sintered material.

4. Screw assembly (1) according to claim 3, **characterized in that** said sintered material is corrosion-resistant sintered steel or sintered bronze.

5. Screw assembly (1) according to one of the claims 1 to 4, **characterized in that** said material has a density of 6.4 g/cm³ to 6.8 g/cm³.

6. Screw assembly (1) according to one of the claims 1 to 4, **characterized in that** said material has a pore volume of 15 +/- 2.5%.

7. Screw assembly (1) according to one of the claims 3 to 6, **characterized in that** said sintered material is produced using coarse-grained granulate.

8. Screw assembly (1) according to one of the claims 1 to 7, **characterized in that** said threaded portion (4) is hardened and/or surface treated and/or coated.

9. Screw assembly (1) according to one of the claims 1 to 8, **characterized in that** said spindle nut (3) comprises two threaded portions (4) each configured as a threaded bushing and arranged coaxial to each other.

10. Screw assembly (1) according to one of the claims 1 to 9, **characterized in that** said threaded spindle (2) is fabricated from ceramic.

11. Screw assembly (1) according to one of the claims 1 to 10, **characterized in that** said threaded spindle (2) has a diameter in the range between 1 mm and 12 mm.

12. Screw assembly (1) according to one of the claims 1 to 11, **characterized in that** said screw assembly (1) comprises an electric motor (12) with a multi-stage planetary gearing (13) as a drive.

13. Spindle nut (3) for a screw assembly (1) according to one of the claims 1 to 9, wherein said spindle nut (3) comprises at least one threaded portion (4) with an internal thread (5), and where said internal thread (5) is configured as a steep thread and is engageable in an external thread (6) of a threaded spindle (2) of the screw assembly, wherein said threaded portion (4) is made of material that has an open-pore structure, and wherein the material is soaked with a glide fluid (7), **characterized in that** said glide fluid (7) is synthetic hydrocarbon oil, a mesogenic (liquid-crystal-based) liquid or a fluid mixture containing a mesogenic (liquid-crystal-based) liquid.

## Revendications

1. Mécanisme de transmission d'entraînement à filetage (1) comprenant une broche filetée (2) et un écrou de broche (3), mécanisme
dans lequel l'écrou de broche (3) présente au moins une partie filetée (4) à filetage intérieur (5), et
dans lequel le filetage intérieur (5) est réalisé sous forme de filetage à pas rapide et est en prise avec un filetage extérieur (6) de la broche filetée (2),
dans lequel la partie filetée (4) est réalisée en un matériau qui présente une structure à pores ouverts,
et dans lequel ledit matériau est imprégné d'un fluide de glissement (7),
**caractérisé en ce que** le fluide de glissement (7) est une huile d'hydrocarbure, un liquide mésogène (à base de cristaux liquides) ou bien un mélange de fluides renfermant un liquide mésogène (à base de cristaux liquides).

2. Mécanisme de transmission d'entraînement à filetage (1) selon la revendication 1, **caractérisé en ce que** le filetage à pas rapide présente un angle d'inclinaison d'hélice α d'au moins 10°.

3. Mécanisme de transmission d'entraînement à filetage (1) selon la revendication 1 ou la revendication 2, **caractérisé en ce que** ledit matériau est un matériau de frittage.

4. Mécanisme de transmission d'entraînement à filetage (1) selon la revendication 3, **caractérisé en ce que** le matériau de frittage est un acier de frittage résistant à la corrosion ou un bronze de frittage.

5. Mécanisme de transmission d'entraînement à filetage (1) selon l'une des revendications 1 à 4,
**caractérisé en ce que** ledit matériau présente une densité de 6,4 g/cm³ à 6,8 g/cm³.

6. Mécanisme de transmission d'entraînement à filetage (1) selon l'une des revendications 1 à 4,
**caractérisé en ce que** ledit matériau présente un volume de pores de 15 +/-2,5%.

7. Mécanisme de transmission d'entraînement à filetage (1) selon l'une des revendications 3 à 6,
**caractérisé en ce que** le matériau de frittage est fabriqué par l'utilisation d'un granulat à gros grains.

8. Mécanisme de transmission d'entraînement à filetage (1) selon l'une des revendications 1 à 7,
**caractérisé en ce que** la partie filetée (4) a subi une trempe et/ou un traitement de surface et/ou est revêtue.

9. Mécanisme de transmission d'entraînement à filetage (1) selon l'une des revendications 1 à 8,
**caractérisé en ce que** l'écrou de broche (3) comprend deux parties filetées (4), chacune sous forme de douille filetée, qui sont agencées de manière coaxiale l'une à l'autre.

10. Mécanisme de transmission d'entraînement à filetage (1) selon l'une des revendications 1 à 9,
**caractérisé en ce que** la broche filetée (2) est fabriquée en une céramique.

11. Mécanisme de transmission d'entraînement à filetage (1) selon l'une des revendications 1 à 10,
**caractérisé en ce que** la broche filetée (2) présente un diamètre dans une plage entre 1 mm et 12 mm.

12. Mécanisme de transmission d'entraînement à filetage (1) selon l'une des revendications 1 à 11,
**caractérisé en ce que** le mécanisme de transmission d'entraînement à filetage (1) comprend un moteur électrique (12) en guise d'entraînement, avec une transmission à train épicycloïdal (13) à plusieurs étages.

13. Ecrou de broche (3) pour un mécanisme de transmission d'entraînement à filetage (1) selon l'une des revendications 1 à 9,
l'écrou de broche (3) présentant au moins une partie filetée (4) à filetage intérieur (5), et
le filetage intérieur (5) étant réalisé sous forme de filetage à pas rapide et étant en prise avec un filetage extérieur (6) de la broche filetée (2),
la partie filetée (4) étant réalisée en un matériau qui présente une structure à pores ouverts,
et ledit matériau étant imprégné d'un fluide de glissement (7),
**caractérisé en ce que** le fluide de glissement (7) est une huile d'hydrocarbure, un liquide mésogène (à base de cristaux liquides) ou bien un mélange de fluides renfermant un liquide mésogène (à base de cristaux liquides).
